(19) Europäisches Patentamt
European Patent Office
Office européen des brevets

(11) **EP 4 430 227 B1**

(12) **EUROPEAN PATENT SPECIFICATION**

(45) Date of publication and mention
of the grant of the patent:
**04.02.2026 Bulletin 2026/06**

(21) Application number: **22805909.3**

(22) Date of filing: **01.11.2022**

(51) International Patent Classification (IPC):
**C25B 1/04** *(2021.01)* **C25B 9/70** *(2021.01)*
**C25B 9/73** *(2021.01)* **C25B 15/08** *(2006.01)*

(52) Cooperative Patent Classification (CPC):
**C25B 1/04; C25B 9/70; C25B 9/73; C25B 15/08;
C25B 15/083; C25B 15/087;** Y02E 60/36

(86) International application number:
**PCT/FI2022/050711**

(87) International publication number:
**WO 2023/084148 (19.05.2023 Gazette 2023/20)**

(54) **AN ELECTROLYZER SYSTEM AND A METHOD FOR WATER ELECTROLYSIS**

ELEKTROLYSESYSTEM UND VERFAHREN ZUR WASSERELEKTROLYSE

SYSTÈME D'ÉLECTROLYSEUR ET PROCÉDÉ D'ÉLECTROLYSE DE L'EAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.11.2021 FI 20216157**

(43) Date of publication of application:
**18.09.2024 Bulletin 2024/38**

(73) Proprietor: **Lappeenrannan-Lahden teknillinen
yliopisto LUT
53851 Lappeenranta (FI)**

(72) Inventors:
• **AHOLA, Jero**
**53851 Lappeenranta (FI)**
• **KAURANEN, Pertti**
**53851 Lappeenranta (FI)**
• **NIEMELÄ, Markku**
**53851 Lappeenranta (FI)**
• **RUUSKANEN, Vesa**
**53851 Lappeenranta (FI)**
• **KOSONEN, Antti**
**53851 Lappeenranta (FI)**

(74) Representative: **Väänänen, Janne Kalervo
Vanarix Oy
Laaksolahdentie 74
02730 Espoo (FI)**

(56) References cited:
WO-A1-2021/053260    CN-U- 216 445 472
DE-C- 514 741    US-A1- 2019 131 634

**Description**

**Field of the disclosure**

The disclosure relates generally to electrolysis for decomposing water into oxygen and hydrogen with the aid of electric current. More particularly, the disclosure relates to an electrolyzer system for water electrolysis such as alkaline water electrolysis. Furthermore, the disclosure relates to a method for water electrolysis.

**Background**

An electrochemical process where material interacts with electrodes can be for example an electrolysis process such as e.g. water electrolysis where electrical energy is converted into chemical energy carried by hydrogen gas $H_2$, and oxygen gas $O_2$ is produced as a side-product. Direct current is passed between electrodes, and hydrogen gas is produced at the cathode i.e. the negative electrode, and oxygen gas is produced at the anode i.e. the positive electrode. The Faraday's law of electrolysis states that the production of hydrogen gas is directly proportional to the electric charge transferred at the electrodes. Thus, the mean value of the direct current determines the production rate of hydrogen gas.

Alkaline water electrolysis is a widely used type of water electrolysis where electrodes operate in alkaline liquid electrolyte that may comprise e.g. aqueous potassium hydroxide "KOH" or aqueous sodium hydroxide "NaOH". The electrodes are separated by a porous diaphragm that is non-conductive to electrons, thus avoiding electrical shorts between the electrodes while allowing a small distance between the electrodes. The porous diaphragm further avoids a mixing of produced hydrogen gas $H_2$ and oxygen gas $O_2$. The ionic conductivity needed for electrolysis is caused by hydroxide ions OH- which can penetrate the porous diaphragm.

A typical electrolyzer system for water electrolysis comprises an electrolyzer stack constituted by electrolysis cells each of which comprises an anode, a cathode, and a porous diaphragm of the kind mentioned above. The porous diaphragm divides each electrolysis cell into a cathode compartment containing the cathode and an anode compartment containing the anode. Typically, the electrolyzer system further comprises a hydrogen separator tank, an oxygen separator tank, and a water inlet configured to receive water to be decomposed into oxygen and hydrogen. The hydrogen separator tank is configured to receive a mixture of hydrogen and electrolyte from the cathode compartments of the electrolysis cells, and the oxygen separator tank is configured to receive a mixture of oxygen and the electrolyte from the anode compartments of the electrolysis cells. The hydrogen separator tank comprises a hydrogen outlet configured to remove the hydrogen from the hydrogen separator tank, and the oxygen separator tank comprises an oxygen outlet configured to remove the oxygen from the oxygen separator tank. Furthermore, the electrolyzer system comprises a channel system configured to conduct the electrolyte from the hydrogen separator tank and from the oxygen separator tank to the electrolyzer stack. In real water electrolysis such as alkaline water electrolysis, there are always losses which will mainly heat up the electrolyzer system. The extra heat can be removed from the electrolyte by a heat exchanger to keep operating temperature within a suitable range.

The specific energy consumption of water electrolysis is affected by both voltage and current efficiency. The voltage efficiency depends on several things, such as, operating temperature, current density, and resistances of the above-mentioned diaphragm and the electrolyte. Current efficiency, on the other hand, depends on a fraction of total electric current supplied to an electrolyzer system which decomposes water into hydrogen and oxygen. Both the voltage and current efficiency should be high enough to guarantee energy efficient production of hydrogen and oxygen in water electrolysis.

A typical electrolyzer stack comprises electrically series connected electrolysis cells which are coupled to input and output manifolds so that parallel connected electrolyte circulation paths are formed. The input manifolds distribute the electrolyte to the anode and cathode compartments of the electrolysis cells. Correspondingly, the output manifolds collect a mixture of electrolyte and hydrogen or oxygen from the electrolysis cells to hydrogen and oxygen separators. After gas separation, the electrolyte is pumped back to the input manifolds. The parallel connected electrolyte circulation paths together with electrical conductivity of the electrolyte constitute parallel paths for stray electric currents. Due to this, a part of the electric current supplied to the electrolyzer stack flows through the channels for the electrolyte circulation, which causes extra heating and/or even corrosion in metallic parts. The channels and other means for the electrolyte circulation need to be dimensioned so that sufficient electrolyte circulation can be arranged for every one of the series connected electrolysis cells. Therefore, stray electric currents tend to increase and thus the current efficiency decreases as the number of the electrolysis cells connected in series increases. In an industrial multi-megawatt alkaline electrolyzer stack there may be 150 cells in series and operating voltage of the electrolyzer stack can be quite low, about 300 V. The current efficiency may be from 80 % to 90%.

The low operating voltage and the low current efficiency are significant challenges related to industrial multi-megawatt water electrolyzer systems. The low operating voltage and correspondingly high operating electric current increase investment costs and cause additional resistive losses in power distribution. Due to the low operating voltage and correspondingly high operating electric current, thyristor-based supply converters are used in many cases. This further leads to poor power quality in the electrolyzer stack as well as in an electric grid supplying the electrolyzer system. The poor power quality causes additional energy losses and its mitigation with e.g. filters increases the investment costs. A key reason for selecting the low operating voltage in water electrolysis are the stray electric currents which tend to increase as the number of series connected electrolysis cells is increased. In many cases, it can be challenging to find a satisfactory compromise between the operating voltage and the current efficiency.

Publication US2019131634 describes a module for electrolysis or co-electrolysis of water or of solid oxide fuel-cells "SOFC". The module integrates electrical and fluid interconnectors for distributing electric current and gases within a reactor for high-temperature electrolysis or co-electrolysis of water "HTE" of solid-oxide electrolysis cells type, for producing hydrogen $H_2$ from steam $H_2O$, or of a fuel cell of SOFC type.

Publication DE514741 describes an electrolyzer that comprises a stack of electrochemical cells. A small part of electrolyte circulating in the individual electrochemical cells, preferably in cathode compartments, is branched off to a common external circuit, which is used to regulate the concentration and the temperature of the electrolyte.

## Summary

The following presents a simplified summary to provide basic understanding of some aspects of various embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying and non-limiting embodiments.

In accordance with the invention, there is provided a new electrolyzer system for water electrolysis, for example alkaline water electrolysis. An electrolyzer system according to the invention comprises electrolyzer elements each of which comprises:

- an electrolyzer stack comprising electrolysis cells,

- a water inlet configured to receive water to be decomposed into oxygen and hydrogen,

- a hydrogen separator tank configured to receive a mixture of hydrogen and electrolyte from cathode compartments of the electrolysis cells and comprising a hydrogen outlet configured to remove the hydrogen from the hydrogen separator tank,

- an oxygen separator tank configured to receive a mixture of oxygen and the electrolyte from anode compartments of the electrolysis cells and comprising an oxygen outlet configured to remove the oxygen from the oxygen separator tank, and

- a channel system configured to conduct the electrolyte from the hydrogen separator tank and from the oxygen separator tank to the electrolyzer stack.

The electrolyzer stacks of the electrolyzer elements are electrically connected to each other so that direct voltage of the electrolyzer system is a sum of direct voltages of the electrolyzer stacks of two or more of the electrolyzer elements. Furthermore, the water inlets, the hydrogen outlets, and the oxygen outlets of different ones of the electrolyzer elements are galvanically separated from each other to avoid stray electric currents between the electrolyzer elements.

As the stray electric currents between the electrolyzer elements are avoided with the above-mentioned galvanic separation, it is possible to connect many electrolyzer elements in series without sacrificing the current efficiency of the electrolyzer system. Therefore, operating voltage that is sufficiently high for modern transistor-based, low-cost power converter technology can be achieved without sacrificing the current efficiency.

For example, a desirable voltage level suitable for modern transistor-based, low-cost power converter technology that is currently used in solar, wind, and automotive sectors is from 800 to 1600 Volts. In an electrolyzer system for alkaline water electrolysis, this voltage level would require from 400 to 800 electrically series connected electrolysis cells.

In an electrolyzer system according to an exemplifying and non-limiting embodiment, an electrical series connection of 400-800 electrolysis cells can be achieved for example so that there are 8-16 electrically series connected electrolyzer elements each comprising 50 electrically series connected electrolysis cells. In practice, the electrolyzer system may comprise electrically parallel connected groups each comprising electrically series connected electrolyzer elements or electrically series connected groups each comprising electrically parallel connected electrolyzer elements. Each of the electrolyzer elements comprises its own means for hydrogen and oxygen separation, for electrolyte circulation, and for receiving water, advantageously deionized water, to be decomposed. As the number of the series connected electrolysis cells in each electrolyzer element does not need to be high, the current efficiency of each electrolyzer element and thereby the current efficiency of the whole electrolyzer system can be higher than in a traditional electrolyzer stack that has e.g. 400-800 series connected electrolysis cells. Furthermore, each electrolyzer element comprises advantageously its own means for temperature control of electrolyte contained by the electrolyzer element under consideration.

In accordance with the invention, there is provided also a new method for water electrolysis to generate hydrogen. A method according to the invention comprises supplying electric current to an electrolyzer system according to the invention.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features. Furthermore, it is to be understood that the use of "a" or "an", i.e. a singular form, throughout this document does not exclude a plurality.

The features recited in dependent claims are mutually freely combinable unless otherwise explicitly stated.

**Brief description of the figures**

Exemplifying and non-limiting embodiments and their advantages are explained in greater detail below in the sense of examples and with reference to the accompanying drawings, in which:

figures 1a, 1b, 1c, and 1d illustrate electrolyzer systems according to exemplifying and non-limiting embodiments for water electrolysis,

figure 2 illustrates an electrolyzer system according to an exemplifying and non-limiting embodiment for water electrolysis, and

figure 3 shows a flowchart of a method according to an exemplifying and non-limiting embodiment for water electrolysis.

**Description of the exemplifying embodiments**

The specific examples provided in the description given below should not be construed as limiting the scope and/or the applicability of the appended claims. Lists and groups of examples provided in the description given below are not exhaustive unless otherwise explicitly stated.

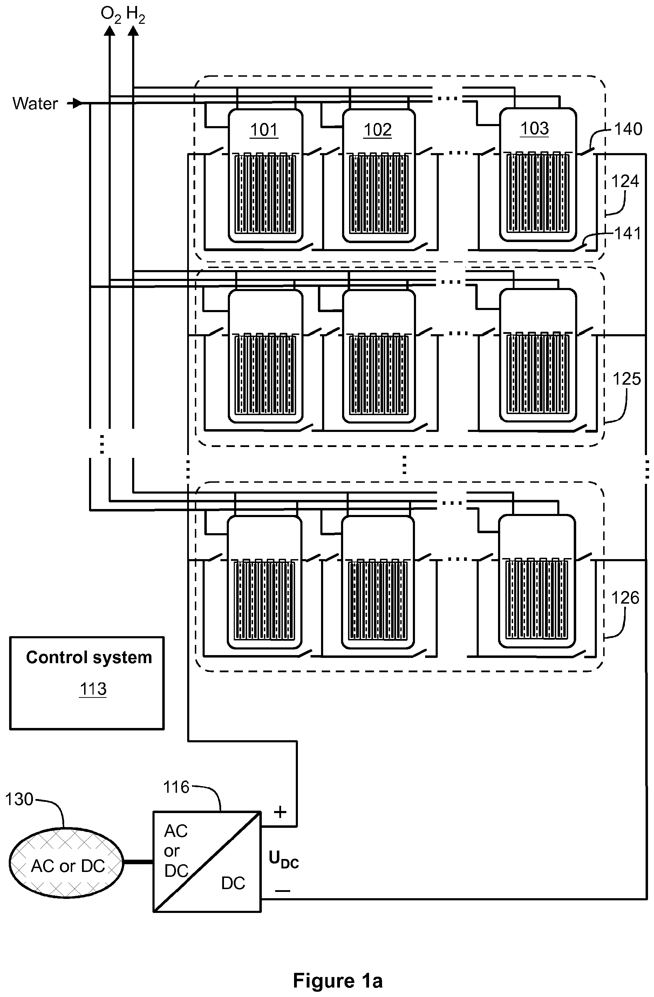

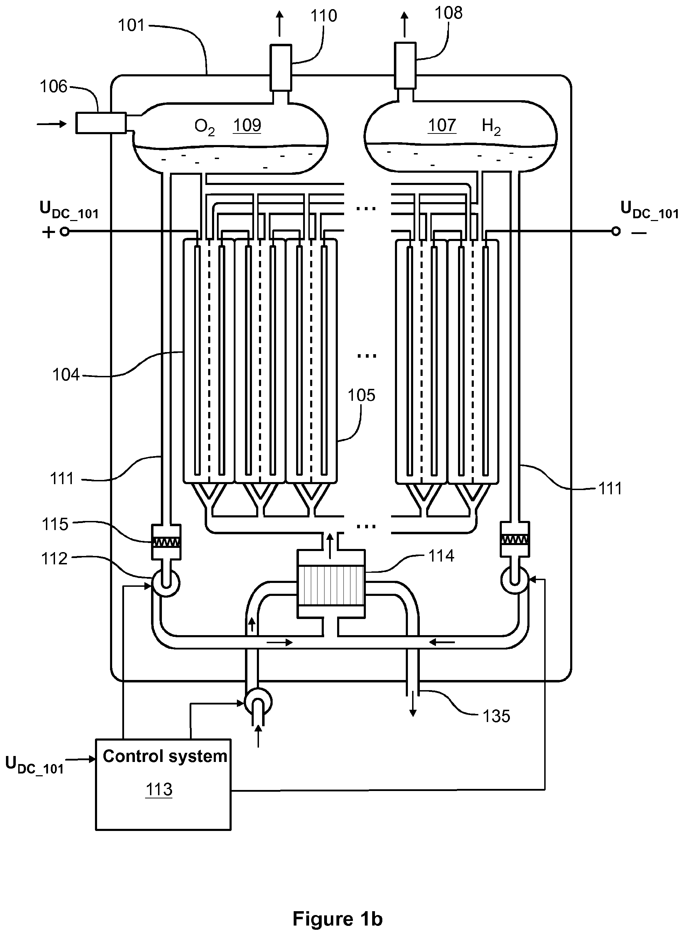

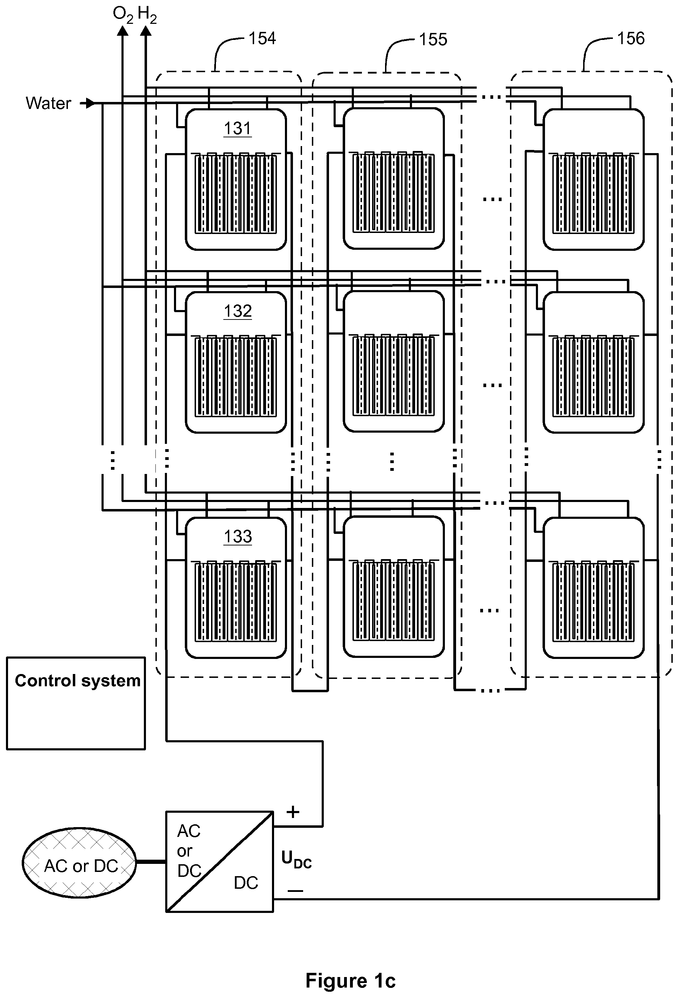

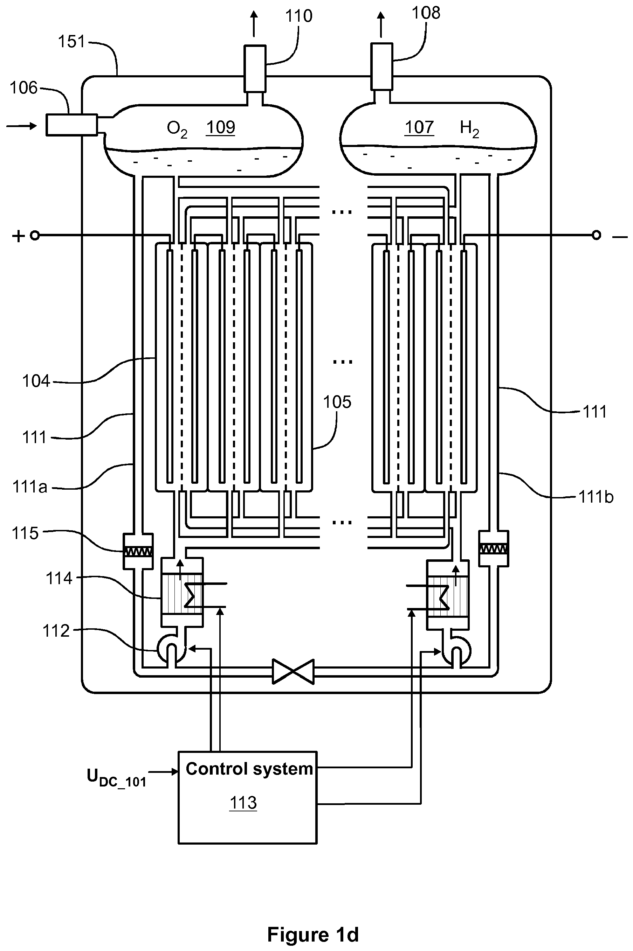

Figures 1a and 1b illustrate an electrolyzer system according to an exemplifying and non-limiting embodiment for water electrolysis. The electrolyzer system comprises electrolyzer elements three of which are denoted with references 101, 102, and 103 in figure 1. Figure 1b illustrates the electrolyzer element 101 in more details. The other electrolyzer elements can be like the electrolyzer element 101. The electrolyzer element 101 comprises an electrolyzer stack 104 constituted by electrolysis cells. In figure 1b, one of the electrolysis cells is denoted with a reference 105. Each of the electrolysis cells comprises an anode, a cathode, and a porous diaphragm dividing the electrolysis cell into a cathode compartment containing the cathode and an anode compartment containing the anode. In an exemplifying case in which the water electrolysis is alkaline water electrolysis, liquid electrolyte may comprise e.g. aqueous potassium hydroxide "KOH" or aqueous sodium hydroxide "NaOH". The electrolyzer stack 104 may comprise e.g. tens of electrolysis cells. In the exemplifying electrolyzer element 101, the electrolysis cells are electrically series connected. It is however also possible that electrolysis cells of an electrolyzer element are arranged to constitute series connected groups of parallel connected electrolysis cells, or parallel connected groups of series connected electrolysis cells.

In the exemplifying electrolyzer system illustrated in figures 1a and 1b, the electrolyzer elements are arranged to constitute groups so that the electrolyzer stacks of the electrolyzer elements within each group are electrically series connected and the groups are electrically parallel connected. In figure 1a, three of the groups are denoted with references 124, 125, and 126. Figure 1c illustrates an electrolyzer system according to another exemplifying and non-limiting embodiment where the electrolyzer elements are arranged to constitute groups so that the electrolyzer stacks of the electrolyzer elements within each group are electrically parallel connected and the groups are electrically series connected. In figure 1c, three of the electrolyzer elements are denoted with references 131, 132, and 133, and three of the groups are denoted with references 154, 155, and 156.

The electrolyzer element 101 shown in figure 1b comprises a water inlet 106 configured to receive water, advantageously deionized water, to be decomposed into oxygen $O_2$ and hydrogen $H_2$. The electrolyzer element 101 comprises a hydrogen separator tank 107 configured to receive a mixture of hydrogen and electrolyte from the cathode compartments of the electrolysis cells. The hydrogen separator tank 107 comprises a hydrogen outlet 108 configured to remove the hydrogen from the hydrogen separator tank. The electrolyzer element 101 comprises an oxygen separator tank 109 configured to receive a mixture of oxygen and the electrolyte from the anode compartments of the electrolysis cells. The oxygen separator tank 109 comprises an oxygen outlet 110 configured to remove the oxygen from the oxygen separator tank. The electrolyzer element 101 comprises a channel system 111 configured to conduct the liquid electrolyte from the hydrogen separator tank 107 and from the oxygen separator tank 109 to the electrolyzer stack. 104. Thus, each electrolyzer element comprises its own electrolyte circulation system that is separate from corresponding electrolyte circulation systems of the other electrolyzer elements. This arrangement eliminates electrolyte-carried stray electric currents between the electrolyzer elements.

Figure 1d shows an electrolyser element 151 in which electrolyte circulation via the anode compartments of the electrolysis cells and electrolyte circulation via the cathode compartments of the electrolysis cells are more separate from each other than in the electrolyzer element 101 illustrated in figure 1b. The channel system 111 of the electrolyser element 151 comprises a first part 111a for circulating the electrolyte via the anode compartments of the electrolysis cells and a second part 111b for circulating the electrolyte via the cathode compartments of the electrolysis cells. As shown in figure 1d, the circulation path of the electrolyte via the anode compartments is separate from the circulation path of the electrolyte via the cathode compartments. The aim of this arrangement is to further decrease stray electric currents via the channeling system for electrolyte circulation. The functionality of the elements denoted with other references in figure 1d are explained in conjunction with figure 1b.

The water inlets of different electrolyzer elements are galvanically separated from each other to avoid stray electric currents between the electrolyzer elements. Correspondingly, the hydrogen outlets of different electrolyzer elements are galvanically separated from each other and the oxygen outlets of different electrolyzer elements are galvanically separated from each other to avoid stray electric currents between the electrolyzer elements. The galvanic separation can be implemented for example so that the water inlets, the hydrogen outlets, and the oxygen outlets have pipe sections made of electrically insulating material such as e.g. plastic or rubber.

A hydrogen production rate $dn_{H2}/dt$, mol/s, in each electrolysis cell is substantially linearly proportional to electric current $I_{cell}$ of the electrolysis cell as follows:

$$dn_{H2}/dt = \eta_F\, j_{cell}\, A_{cell}\, /(zF) = \eta_F\, I_{cell}\, /(zF), \qquad\qquad (1)$$

where $\eta_F$ is the current efficiency also known as Faraday efficiency, $j_{cell}$ is the electric current density, A/cm$^2$, $A_{cell}$ is the effective cell area, cm$^2$, z is the number of moles of electrons transferred in the reaction, for hydrogen z = 2, and F is the Faraday constant $\approx 9.6485 \times 10^4$ C/mol.

In order to maximize the energy efficiency of a water electrolysis process e.g. an alkaline water electrolysis process, the above-mentioned current efficiency $\eta_F$ should be as close to one as possible in all operating conditions. The current efficiency is reduced by stray electric currents taking place in a system for water electrolysis.

The above-described modular arrangement where the electrolyzer system comprises electrolyzer elements each of which comprises its own electrolyte circulation system and where the water inlets, the hydrogen outlets, and the oxygen outlets of different ones of the electrolyzer elements are galvanically separated from each other reduces the stray electric currents in the electrolyzer system. Therefore, the above-described modular arrangement improves the current efficiency $\eta_F$. Furthermore, as the number of series connected electrolysis cells in each electrolyzer element does not need to be high, many parts of the channels for circulating the electrolyte within the electrolyzer element can have smaller cross-sectional flow areas than in a case in which the number of series connected electrolysis cells is high. Thus, the lower number of series connected electrolysis cells makes it possible to design the channels so that stray electric currents are smaller. Furthermore, the direct voltage of each electrolyzer element is smaller due to the lower number of series connected electrolysis cells, which also decreases the stray electric currents.

Furthermore, the modular arrangement makes it possible to construct different electrolyzer systems using identical electrolyzer elements by varying the number of the electrolyzer elements and/or electrical connections between the electrolyzer elements. Furthermore, a use of identical mass-produced electrolyzer elements facilitates automatization of production and testing of electrolyzer systems. Furthermore, the modular arrangement facilitates monitoring and diagnostics of the electrolyzer system because the direct voltages of the electrolyzer elements are straightforward to measure. The modular arrangement enables easier maintenance of the electrolyzer system. For example, a faulty electrolyzer element can be replaced with a new one without a need for repairing actions concerning other ones of the electrolyzer elements.

An electrolyzer system according to an exemplifying and non-limiting embodiment comprises switches that enable each of the electrolyzer elements to be electrically bypassed. For example, a faulty electrolyzer element can be bypassed while the other electrolyzer elements may continue their operation. In figure 1a, two of the switches are denoted with references 140 and 141. The switches can be for example remote controllable switches. In many cases, it is sufficient that groups of series connected electrolyzer elements, like the groups 124, 125, and 126, can be electrically separated from the other part of the electrolyzer system. In this exemplifying case, switches are needed only at the ends of each group. The water inlets, the hydrogen outlets, and the oxygen outlets of the electrolyzer elements are advantageously provided with valves which enable deactivation and/or removal of each electrolyzer element without disturbing the operation of the other electrolyzer elements.

In an electrolyzer system according to an exemplifying and non-limiting embodiment, the channel system of each electrolyzer element comprises at least one controllable pump configured to pump the liquid electrolyte to the electrolyzer stack. Furthermore, the channel system of each electrolyzer element may comprise one or more filters configured to filter the electrolyte. In figure 1b, one of the controllable pumps of the electrolyzer element 101 is denoted with a reference 112 and one of the filters of the electrolyzer element 101 is denoted with a reference 115. Each filter can be for example a membrane filter for removing impurities from the electrolyte. In this exemplifying case, the electrolyzer element 101 comprises two controllable pumps but it is also possible that an electrolyzer element comprises only one controllable pump. An electrolyzer system according to an exemplifying and non-limiting embodiment comprises a control system 113 that is configured to control the one or more controllable pumps of each electrolyzer element based on at least the direct voltage of the electrolyzer element under consideration. In figure 1b, the direct voltage of the electrolyzer element 101 is denoted as $U_{DC\_101}$. In the exemplifying electrolyzer system illustrated in figures 1a and 1b, the control system 113 is a centralized control system that controls each of the electrolyzer elements. It is also possible that each electrolyzer element comprises an own control system and the electrolyzer system comprises a master controller communicatively connected to the control systems of the electrolyzer elements.

In an electrolyzer system according to an exemplifying and non-limiting embodiment, the channel system of each electrolyzer element comprises a heat exchanger configured to change temperature of the electrolyte. In figure 1b, the heat exchanger of the electrolyzer element 101 is denoted with a reference 114. The control system 113 is advantageously configured to control the heat exchanger of each electrolyzer element based on at least the direct voltage of the electrolyzer element under consideration. The control system 113 can be configured to adjust an electrolyte flow to the heat exchanger 114 to minimize the direct voltage $U_{DC\_101}$ while keeping temperature of the electrolyte within allowed electrolyte temperature limits in all operating conditions in accordance with known control techniques related to water electrolysis. For example, the control system 113 can be configured to run simultaneously the following two methods for controlling the energy efficiency of the electrolyzer element 101: i) minimization of the direct voltage $U_{DC\_101}$ by temperature control in which the temperature is kept close to a maximum allowed temperature, and ii) minimization of stray electric currents by keeping the circulation rate of the electrolyte as low as possible. The channeling from the electrolysis cells to the hydrogen and oxygen separator tanks contains a mixture of gases and the electrolyte. Decreasing the circulation rate of the electrolyte increases the gas content in the mixture and thus lowers the electrical conductivity of the mixture. Therefore, the stray electric currents can be minimized by keeping the circulation rate of the electrolyte as low as possible. A suitable circulation rate of the electrolyte can be found based on the direct voltage $U_{DC\_101}$, because the direct voltage $U_{DC\_101}$ tends to rise if the circulation rate is too low. The energy efficiency of the whole electrolyzer system can be controlled with the aid of element-specific controls of the kind discussed above. The control system 113 is advantageously configured to control the direct voltage $U_{DC}$ of the whole electrolyzer system to be in balance with the element-specific controls of the electrolyzer elements.

The above-mentioned heat exchanger 114 and/or a temperature control circuit 135 for transferring temperature control fluid are advantageously constructed so that stray electric currents cannot flow via the temperature control circuit 135. The temperature control circuit 135 may comprise for example pipe sections made of electrically insulating material such as e.g. plastic or rubber, and the temperature control fluid can be electrically non-conductive, e.g. deionized water.

The implementation of the control system 113 can be based on one or more processor circuits, each of which can be a programmable processor circuit provided with appropriate software, a dedicated hardware processor such as for example an application specific integrated circuit "ASIC", or a configurable hardware processor such as for example a field programmable gate array "FPGA". Furthermore, the control system 113 may comprise one or more memory devices such as e.g. random-access memory "RAM" circuits.

An electrolyzer system according to an exemplifying and non-limiting embodiment comprises a forced commutation power converter 116 configured to transfer electric energy from an electric grid 130 to the electrolyzer elements of the electrolyzer system. Depending on the electric grid 130, the forced commutation power converter 116 can be an alternating "AC" voltage-to-direct "DC" voltage converter or a DC-to-DC converter. The forced commutation of the power converter 116 enables reduction of electric current ripple in the DC current supplied to the group of the electrolyzer elements as well as reduction of unwanted electric current components in the electric grid 130. It is however also possible that an electrolyzer system according to an exemplifying and non-limiting embodiment does not comprise a power converter but is connected to an external DC current supply.

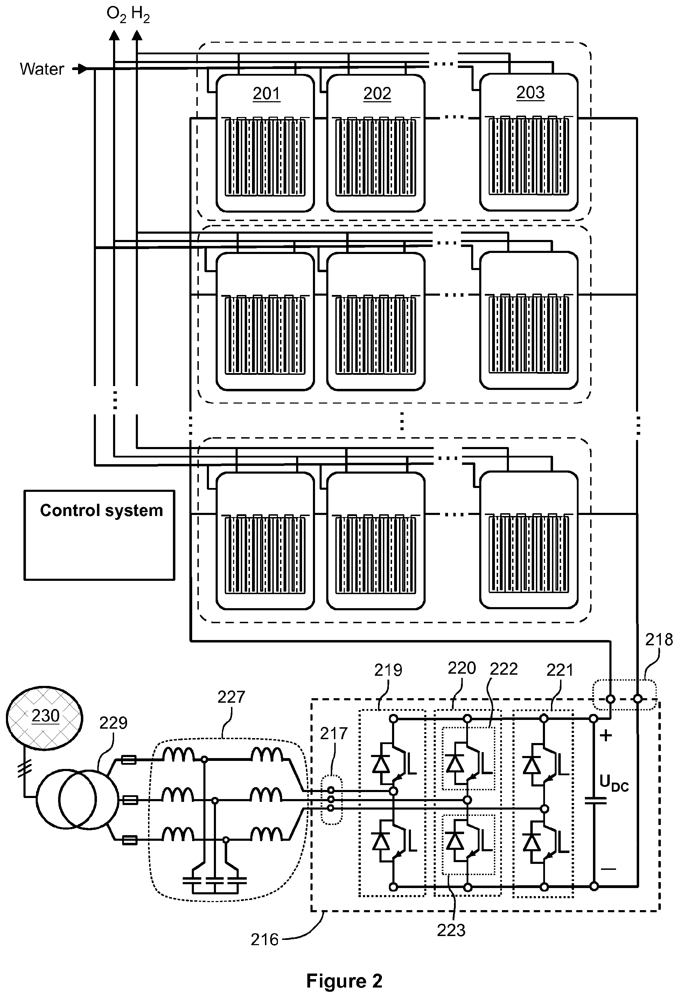

A DC-to-DC converter can be for example a flyback converter or some other suitable DC-to-DC converter. Figure 2 illustrates an electrolyzer system according to an exemplifying and non-limiting embodiment in which a forced commutation power converter 216 is an AC-to-DC converter. The electrolyzer system illustrated in figure 2 comprises electrolyzer elements three of which are denoted with references 201, 202, and 203. The electrolyser elements of the electrolyzer system illustrated in figure 2 can be like the electrolyser elements of the electrolyzer system illustrated in figure 1a.

The forced commutation power converter 216 comprises alternating voltage terminals 217 for receiving AC voltages, and direct voltage terminals 218 for supplying DC current to the group of the electrolyzer elements. The power converter 216 comprises converter legs 219, 220, and 221 each of which comprises one of the alternating voltage terminals 217 and is connected between the direct voltage terminals 218. Each of the converter legs comprises a bi-directional upper-branch controllable switch between the alternating voltage terminal of the converter leg under consideration and a positive one of the direct voltage terminals 218 and a bi-directional lower-branch controllable switch between the alternating voltage terminal of the converter leg under consideration and a negative one of the direct voltage terminals 218. In figure 2, the bi-directional upper-branch controllable switch of the converter leg 220 is denoted with a reference 222 and the bi-directional lower-branch controllable switch of the converter leg 220 is denoted with a reference 223.

In this exemplifying case, each bi-directional controllable switch comprises an insulated gate bipolar transistor "IGBT" and an antiparallel diode. It is however also possible that each bi-directional controllable switch comprises e.g. a gate turn-off thyristor "GTO", or a metal oxide field effect transistor "MOSFET", or some other suitable semiconductor switch in lieu of the IGBT. The forced commutation power converter 216 comprises a gate-driver unit for controlling the operation of the controllable switches so that desired DC current is supplied to the group of the electrolyzer elements and desired AC voltages occur at the alternating voltage terminals 217. The gate-driver unit is not shown in figure 2.

The exemplifying electrolyzer system illustrated in figure 2 comprises an inductor-capacitor-inductor "LCL" filter 227 that is connected between the forced commutation power converter 216 and secondary windings of a transformer 229. Primary windings of the transformer 229 are connected to a three-phase electric grid 230. It is also possible that there are serial inductances in lieu of the LCL filter 227.

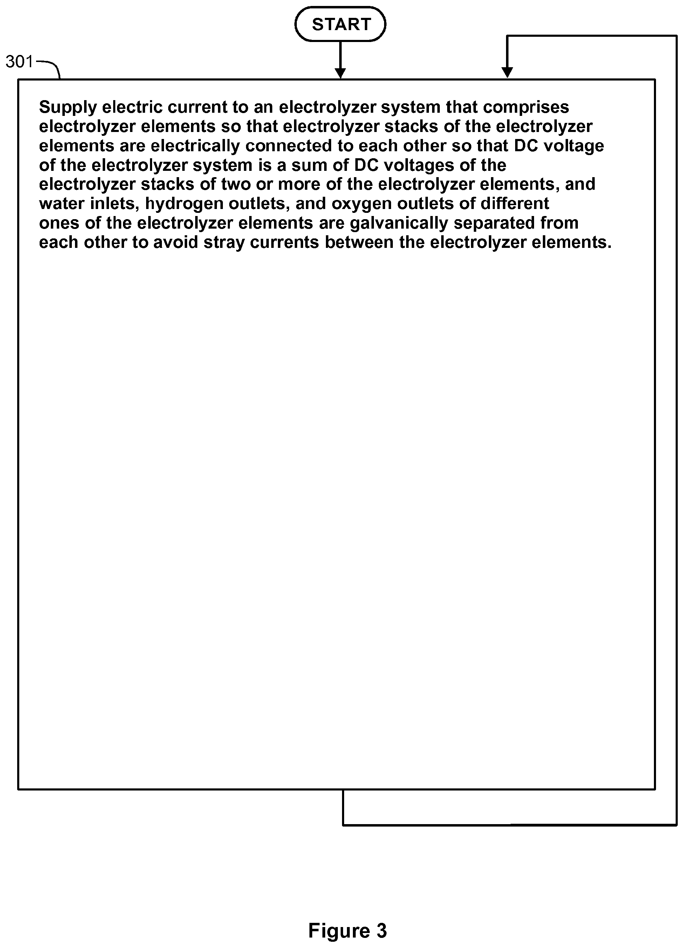

Figure 3 shows a flowchart of a method according to an exemplifying and non-limiting embodiment for water electrolysis. The method comprises supplying 301 electric current to an electrolyzer system according to an exemplifying embodiment of the invention. The electrolyzer system can be for example such as illustrated in figures 1a and 1b, in figure 1c, or in figure 2.

In a method according to an exemplifying and non-limiting embodiment, the water electrolysis is alkaline water electrolysis and electrolyte of the electrolyzer system comprises aqueous potassium hydroxide "KOH".

In a method according to an exemplifying and non-limiting embodiment, the water electrolysis is alkaline water electrolysis and the electrolyte of the electrolyzer system comprises aqueous sodium hydroxide "NaOH".

The specific examples provided in the description given above should not be construed as limiting the applicability and/or the interpretation of the appended claims. Lists and groups of examples provided in the description given above are not exhaustive unless otherwise explicitly stated.

**Claims**

1. An electrolyzer system for water electrolysis, **characterized in that** the electrolyzer system comprises electrolyzer elements (101-103, 131-133, 151, 201-203) each comprising:

   - an electrolyzer stack (104) comprising electrolysis cells (105),
   - a water inlet (106) configured to receive water to be decomposed into oxygen and hydrogen,
   - a hydrogen separator tank (107) configured to receive a mixture of hydrogen and electrolyte from cathode compartments of the electrolysis cells and comprising a hydrogen outlet (108) configured to remove the hydrogen from the hydrogen separator tank,
   - an oxygen separator tank (109) configured to receive a mixture of oxygen and the electrolyte from anode compartments of the electrolysis cells and comprising an oxygen outlet (110) configured to remove the oxygen from the oxygen separator tank, and
   - a channel system (111) configured to conduct the electrolyte from the hydrogen separator tank and from the oxygen separator tank to the electrolyzer stack,

   wherein the electrolyzer stacks of the electrolyzer elements are electrically connected to each other so that direct voltage of the electrolyzer system is a sum of direct voltages of the electrolyzer stacks of two or more of the electrolyzer elements, and wherein the water inlets, the hydrogen outlets, and the oxygen outlets of different ones of the electrolyzer elements are galvanically separated from each other to avoid stray electric currents between the electrolyzer elements.

2. An electrolyzer system according to claim 1, wherein the channel system of each of the electrolyzer elements comprises at least one controllable pump (112) configured to pump the electrolyte to the electrolyzer stack.

3. An electrolyzer system according to claim 2, wherein the electrolyzer system comprises a control system (113) configured to control the at least one controllable pump of each of the electrolyzer elements based on at least the direct voltage ($U_{DC,101}$) of the electrolyzer element under consideration.

4. An electrolyzer system according to any one of claims 1-3, wherein the channel system of each of the electrolyzer elements comprises a heat exchanger (114) configured to change temperature of the electrolyte.

5. An electrolyzer system according to claim 4, wherein the electrolyzer system comprises a control system (113) configured to control the heat exchanger of each of the electrolyzer elements based on at least the direct voltage ($U_{DC,101}$) of the electrolyzer element under consideration.

6. An electrolyzer system according to any one of claims 1-5, wherein the channel system of each of the electrolyzer elements comprises a filter (115) configured to filter the electrolyte.

7. An electrolyzer system according to any one of claims 1-6, wherein the electrolyzer system comprises a forced commutation power converter (116, 216) configured to control direct current supplied to the electrolyzer elements of the electrolyzer system.

8. An electrolyzer system according to claim 7, wherein the forced commutation power converter comprises alternating voltage terminals (217) configured to receive one or more alternating voltages, direct voltage terminals (218) configured to supply direct current to the electrolyzer elements, and converter legs (219-221) each comprising one of the alternating voltage terminals and being connected between the direct voltage terminals, each of the converter legs comprising a bi-directional upper-branch controllable switch (222) between the alternating voltage terminal of the converter leg under consideration and a positive one of the direct voltage terminals and a bi-directional lower-branch controllable switch (223) between the alternating voltage terminal of the converter leg under consideration and a negative one of the direct voltage terminals.

9. An electrolyzer system according to any one of claims 1-8, wherein the electrolyzer stacks of the electrolyzer elements (101-103, 201-203) are electrically series connected.

10. An electrolyzer system according to any one of claims 1-8, wherein the electrolyzer elements are arranged to constitute groups (124-126) so that the electrolyzer stacks of the electrolyzer elements within each group are electrically series connected and the groups are electrically parallel connected.

11. An electrolyzer system according to any one of claims 1-8, wherein the electrolyzer elements (131-133) are arranged to constitute groups (154-156) so that the electrolyzer stacks of the electrolyzer elements within each group are electrically parallel connected and the groups are electrically series connected.

12. An electrolyzer system according to any one of claims 1-11, wherein the channel system (111) of each of the electrolyser elements (151) comprises a first part (111a) configured to circulate the electrolyte via the anode compartments of the electrolysis cells and a second part (111b) configured to circulate the electrolyte via the cathode compartments of the electrolysis cells, a circulation path of the electrolyte via the anode compartments being separate from a circulation path of the electrolyte via the cathode compartments.

13. An electrolyzer system according to any one of claims 1-12, wherein the electrolyzer system comprises switches (140, 141) configured to enable each of the electrolyzer elements to be electrically bypassed.

14. A method for water electrolysis to generate hydrogen, the method comprising supplying (301) electric current to an electrolyzer system, **characterized in that** the electrolyzer system is an electrolyzer system according to any one of claims 1-13.

15. A method according to claim 14, wherein electrolyte of the electrolyzer system comprises one of the following: aqueous potassium hydroxide, aqueous sodium hydroxide.

**Patentansprüche**

1. Elektrolysesystem zur Wasserelektrolyse, **dadurch gekennzeichnet, dass** das Elektrolysesystem Elektrolyseelemente (101-103, 131-133, 151, 201-203) umfasst, von denen jedes umfasst:

   - einen Elektrolysestapel (104), der Elektrolysezellen (105) umfasst,
   - einen Wassereinlass (106), der dazu eingerichtet ist, Wasser aufzunehmen, das in Sauerstoff und Wasserstoff zerlegt werden soll;
   - einen Wasserstoff-Abscheidebehälter (107), der dazu eingerichtet ist, ein Gemisch aus Wasserstoff und Elektrolyt aus Kathodenkompartimenten der Elektrolysezellen aufzunehmen, und der einen Wasserstoffauslass (108) aufweist, der dazu eingerichtet ist, den Wasserstoff aus dem Wasserstoff-Abscheidebehälter abzuführen;
   - einen Sauerstoff-Abscheidebehälter (109), der dazu eingerichtet ist, ein Gemisch aus Sauerstoff und Elektrolyt aus Anodenkompartimenten der Elektrolysezellen aufzunehmen, und der einen Sauerstoffauslass (110) aufweist, der dazu eingerichtet ist, den Sauerstoff aus dem Sauerstoff-Abscheidebehälter abzuführen; und
   - ein Kanalsystem (111), das dazu eingerichtet ist, den Elektrolyt von dem Wasserstoff-Abscheidebehälter und von dem Sauerstoff-Abscheidebehälter zu dem Elektrolysestapel zu leiten,

   wobei die Elektrolysestapel der Elektrolyseelemente elektrisch miteinander verbunden sind, so dass eine Gleichspannung des Elektrolysesystems einer Summe der Gleichspannungen der Elektrolysestapel von zwei oder mehr der Elektrolyseelemente entspricht, und wobei die Wassereinlässe, die Wasserstoffauslässe und die Sauerstoffauslässe verschiedener Elektrolyseelemente galvanisch voneinander getrennt sind, um Streuströme zwischen den Elektrolyseelementen zu vermeiden.

2. Elektrolysesystem nach Anspruch 1, wobei das Kanalsystem jedes der Elektrolyseelemente mindestens eine steuerbare Pumpe (112) umfasst, die dazu eingerichtet ist, den Elektrolyt zu dem Elektrolysestapel zu pumpen.

3. Elektrolysesystem nach Anspruch 2, wobei das Elektrolysesystem ein Steuersystem (113) umfasst, das dazu eingerichtet ist, die mindestens eine steuerbare Pumpe jedes der Elektrolyseelemente basierend auf zumindest der Gleichspannung ($U_{DC,101}$) des jeweils betrachteten Elektrolyseelements zu steuern.

4. Elektrolysesystem nach einem der Ansprüche 1 bis 3, wobei das Kanalsystem jedes der Elektrolyseelemente einen Wärmetauscher (114) umfasst, der dazu eingerichtet ist, die Temperatur des Elektrolyten zu verändern.

5. Elektrolysesystem nach Anspruch 4, wobei das Elektrolysesystem ein Steuersystem (113) umfasst, das dazu eingerichtet ist, den Wärmetauscher jedes der Elektrolyseelemente basierend auf zumindest der Gleichspannung ($U_{DC,101}$) des jeweils betrachteten Elektrolyseelements zu steuern.

6. Elektrolysesystem nach einem der Ansprüche 1 bis 5, wobei das Kanalsystem jedes der Elektrolyseelemente einen Filter (115) umfasst, der dazu eingerichtet ist, den Elektrolyt zu filtern.

7. Elektrolysesystem nach einem der Ansprüche 1 bis 6, wobei das Elektrolysesystem einen zwangskommutierten Stromrichter (116, 216) umfasst, der dazu eingerichtet ist, den den Elektrolyseelementen des Elektrolysesystems zugeführten Gleichstrom zu steuern.

8. Elektrolysesystem nach Anspruch 7, wobei der zwangskommutierte Stromrichter Wechselspannungsanschlüsse (217) umfasst, die dazu eingerichtet sind, eine oder mehrere Wechselspannungen zu empfangen, Gleichspannungsanschlüsse (218), die dazu eingerichtet sind, Gleichstrom zu den Elektrolyseelementen bereitzustellen, sowie Stromrichterzweige (219-221), von denen jeder einen der Wechselspannungsanschlüsse umfasst und zwischen den Gleichspannungsanschlüssen verbunden ist, wobei jeder der Stromrichterzweige einen bidirektionalen steuerbaren Oberschalter (222) zwischen dem Wechselspannungsanschluss des jeweils betrachteten Stromrichterzweigs und einem positiven der Gleichspannungsanschlüsse sowie einen bidirektionalen steuerbaren Unterschalter (223) zwischen dem Wechselspannungsanschluss des jeweils betrachteten Stromrichterzweigs und einem negativen der Gleichspannungsanschlüsse umfasst.

9. Elektrolysesystem nach einem der Ansprüche 1 bis 8, wobei die Elektrolysestapel der Elektrolyseelemente (101-103, 201-203) elektrisch in Reihe geschaltet sind.

10. Elektrolysesystem nach einem der Ansprüche 1 bis 8, wobei die Elektrolyseelemente so angeordnet sind, dass sie Gruppen (124-126) bilden, so dass die Elektrolysestapel der Elektrolyseelemente innerhalb jeder Gruppe elektrisch in Reihe geschaltet sind und die Gruppen elektrisch parallelgeschaltet sind.

11. Elektrolysesystem nach einem der Ansprüche 1 bis 8, wobei die Elektrolyseelemente (131-133) so angeordnet sind, dass sie Gruppen (154-156) bilden, so dass die Elektrolysestapel der Elektrolyseelemente innerhalb jeder Gruppe elektrisch parallelgeschaltet sind und die Gruppen elektrisch in Reihe geschaltet sind.

12. Elektrolysesystem nach einem der Ansprüche 1 bis 11, wobei das Kanalsystem (111) jedes der Elektrolyseelemente (151) einen ersten Teil (111a) umfasst, der dazu eingerichtet ist, den Elektrolyt über die Anodenkompartimente der Elektrolysezellen zu zirkulieren, und einen zweiten Teil (111b), der dazu eingerichtet ist, den Elektrolyt über die Kathodenkompartimente der Elektrolysezellen zu zirkulieren, wobei ein Zirkulationspfad des Elektrolyten über die Anodenkompartimente von einem Zirkulationspfad des Elektrolyten über die Kathodenkompartimente getrennt ist.

13. Elektrolysesystem nach einem der Ansprüche 1 bis 12, wobei das Elektrolysesystem Schalter (140, 141) umfasst, die dazu eingerichtet sind, jedes der Elektrolyseelemente elektrisch zu überbrücken.

14. Verfahren zur Wasserelektrolyse zur Erzeugung von Wasserstoff, wobei das Verfahren das Zuführen (301) von elektrischem Strom zu einem Elektrolysesystem umfasst, **dadurch gekennzeichnet, dass** das Elektrolysesystem ein Elektrolysesystem nach einem der Ansprüche 1 bis 13 ist.

15. Verfahren nach Anspruch 14, wobei der Elektrolyt des Elektrolysesystems eines von dem Folgenden umfasst: eine wässrige Kaliumhydroxidlösung, eine wässrige Natriumhydroxidlösung.

**Revendications**

1. Système d'électrolyseur pour l'électrolyse de l'eau, **caractérisé en ce que** le système d'électrolyseur comprend des éléments d'électrolyseur (101-103, 131-133, 151, 201-203) comprenant chacun :

   - une colonne d'électrolyseur (104) comprenant des cellules d'électrolyse (105),
   - une entrée d'eau (106) configurée pour recevoir de l'eau à décomposer en oxygène et en hydrogène,
   - une cuve de séparation d'hydrogène (107) configurée pour recevoir un mélange d'hydrogène et de l'électrolyte de compartiments de cathode des cellules d'électrolyse et comprenant une sortie d'hydrogène (108) configurée pour retirer l'hydrogène de la cuve de séparation d'hydrogène,
   - une cuve de séparation d'oxygène (109) configurée pour recevoir un mélange d'oxygène et de l'électrolyte de compartiments d'anode des cellules d'électrolyse et comprenant une sortie d'oxygène (110) configurée pour retirer l'oxygène de la cuve de séparation d'oxygène, et
   - un système de canal (111) configurée pour conduire l'électrolyte de la cuve de séparation d'hydrogène et de la cuve de séparation d'oxygène vers la colonne d'électrolyseur,

   dans lequel les colonnes d'électrolyseur des éléments d'électrolyseur sont connectées électriquement l'une à l'autre de façon à ce que la tension continue du système d'électrolyseur soit une somme de tensions continues des colonnes d'électrolyseur de deux ou plus des éléments d'électrolyseur, et dans lequel les entrées d'eau, les sorties d'hydrogène et les sorties d'oxygène des différents éléments d'électrolyseur sont séparées l'une de l'autre par galvanisation pour éviter des courants électriques vagabonds entre les éléments d'électrolyseur.

2. Système d'électrolyseur selon la revendication 1, dans lequel le système de canal de chacun des éléments d'électrolyseur comprend au moins une pompe pouvant être commandée (112) configurée pour pomper l'électrolyte vers la colonne d'électrolyseur.

3. Système d'électrolyseur selon la revendication 2, dans lequel le système d'électrolyseur comprend un système de commande (113) configuré pour commander l'au moins une pompe pouvant être commandée de chacun des éléments d'électrolyseur en se basant sur au moins la tension continue ($U_{DC,101}$) de l'élément d'électrolyseur en question.

4. Système d'électrolyseur selon l'une quelconque des revendications 1-3, dans lequel le système de canal de chacun des éléments d'électrolyseur comprend un échangeur de chaleur (114) configuré pour modifier la température de l'électrolyte.

**5.** Système d'électrolyseur selon la revendication 4, dans lequel le système d'électrolyseur comprend un système de commande (113) configuré pour commander l'échangeur de chaleur de chacun des éléments d'électrolyse en se basant sur au moins la tension continue ($U_{DC,101}$) de l'élément d'électrolyseur en question.

**6.** Système d'électrolyseur selon l'une quelconque des revendications 1-5, dans lequel le système de canal de chacun des éléments d'électrolyseur comprend un filtre (115) configuré pour filtrer l'électrolyte.

**7.** Système d'électrolyseur selon l'une quelconque des revendications 1-6, dans lequel le système d'électrolyseur comprend un convertisseur de courant à commutation forcée (116, 216) configuré pour commander le courant continu fourni aux éléments d'électrolyseur du système d'électrolyseur.

**8.** Système d'électrolyseur selon la revendication 7, dans lequel le convertisseur de courant à commutation forcée comprend des bornes de tension alternative (217) configurées pour recevoir une ou plusieurs tension(s) alternative(s), des bornes de tension continue (218) configurées pour fournir du courant continu vers les éléments d'électrolyseur, et des pattes de convertisseur (219-221) comprenant chacune une des bornes de tension alternative et étant connectées entre les bornes de tension continue, chacune des pattes de convertisseur comprenant un commutateur (222) bidirectionnel pouvant être commandé de branche supérieure entre la borne de tension alternative de la patte de convertisseur en question et une positive des bornes de tension continue et un commutateur (223) bidirectionnel pouvant être commandé de branche inférieure entre la borne de tension alternative de la patte de convertisseur en question et une négative des bornes de tension continue.

**9.** Système d'électrolyseur selon l'une quelconque des revendications 1-8, dans lequel les colonnes d'électrolyseur des éléments d'électrolyseur (101-103, 201-203) sont connectées électriquement en série.

**10.** Système d'électrolyseur selon l'une quelconque des revendications 1-8, dans lequel les éléments d'électrolyse sont agencés pour constituer des groupes (124-126) de façon à ce que les colonnes d'électrolyseur des éléments d'électrolyseur à l'intérieur de chaque groupe soient connectées électriquement en série et les groupes connectés électriquement en parallèle.

**11.** Système d'électrolyseur selon l'une quelconque des revendications 1-8, dans lequel les éléments d'électrolyse (131-133) sont agencés pour constituer des groupes (154-156) de façon à ce que les colonnes d'électrolyseur des éléments d'électrolyseur à l'intérieur de chaque groupe soient connectées électriquement en parallèle et les groupes connectés électriquement en série.

**12.** Système d'électrolyseur selon l'une quelconque des revendications 1-11, dans lequel le système de canal (111) de chacun des éléments d'électrolyseur (151) comprend une première partie (111a) configurée pour faire circuler l'électrolyte par le biais des compartiments d'anode des cellules d'électrolyse et une seconde partie (111b) configurée pour faire circuler l'électrolyte par le biais des compartiments de cathode des cellules d'électrolyse, un trajet de circulation de l'électrolyte par le biais des compartiments d'anode étant séparé d'un trajet de circulation de l'électrolyte par le biais des compartiments de cathode.

**13.** Système d'électrolyseur selon l'une quelconque des revendications 1-12, dans lequel le système d'électrolyseur comprend des commutateurs (140, 141) configurés pour permettre à chacun des éléments d'électrolyseur d'être court-circuités électriquement.

**14.** Procédé d'électrolyse de l'eau pour générer de l'hydrogène, le procédé comprenant de fournir (301) du courant électrique à un système d'électrolyseur, **caractérisé en ce que** le système d'électrolyseur est un système d'électrolyseur selon l'une quelconque des revendications 1-13.

**15.** Procédé selon la revendication 14, dans lequel l'électrolyte du système d'électrolyseur comprend un de ce qui suit : hydroxyde de potassium aqueux, hydroxyde de sodium aqueux.

**Figure 1a**

**Figure 1b**

Figure 1c

**Figure 1d**

**Figure 2**

START

301

Supply electric current to an electrolyzer system that comprises
electrolyzer elements so that electrolyzer stacks of the electrolyzer
elements are electrically connected to each other so that DC voltage
of the electrolyzer system is a sum of DC voltages of the
electrolyzer stacks of two or more of the electrolyzer elements, and
water inlets, hydrogen outlets, and oxygen outlets of different
ones of the electrolyzer elements are galvanically separated from
each other to avoid stray currents between the electrolyzer elements.

Figure 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019131634 A

- DE 514741